# DEMANDE DE BREVET EUROPEEN

(11) **EP 3 154 070 A1**
(43) Date de publication de la demande: **12.04.2017**
(21) Numéro de dépôt: 16192756.1
(22) Date de dépôt: 07.10.2016
(51) Int. Cl.: H01F 27/14, B01D 53/26, H05K 5/02, B01D 53/04, H02K 9/26

(54) **DESSICCATEUR POUR APPAREIL ÉLECTRIQUE IMMERGÉ**

(30) Priorité: 08.10.2015 FR 1559588
(71) Demandeur: SNCF Mobilités, 93200 Saint-Denis (FR)
(72) Inventeur: CHAMARET, André-Philippe, 72100 LE MANS (FR)
(74) Mandataire: Gevers & Orès

(57) **Abrégé**

L'invention concerne un dessiccateur (1) pour appareil électrique immergé dans un liquide isolant comprenant :au moins une cuve (2) comprenant : une entrée (3) d'air ; un agent absorbant apte à absorber l'humidité de l'air, l'agent absorbant comprenant un indicateur coloré apte à changer la couleur de l'agent absorbant en fonction de son taux d'humidité et une sortie d'air déshumidifié, caractérisé en ce que le dessiccateur (1) comprend : au moins un capteur colorimétrique (7) apte à déterminer la couleur de l'agent absorbant ; un module de gestion (8) relié à chaque capteur colorimétrique et configuré pour pouvoir traiter les données acquises par chaque capteur colorimétrique (7).

## Description

### 1. Domaine technique de l'invention

L'invention concerne un dessiccateur pour appareil électrique immergé dans un liquide isolant. En particulier, l'invention concerne un dessiccateur pour transformateur immergé dans un liquide isolant, notamment pour transformateur de véhicule ferroviaire.

### 2. Arrière-plan technologique

Les équipements électriques à haute tension, tels que les transformateurs sont généralement immergés dans un liquide isolant.

Un transformateur dit transformateur immergé est ainsi constitué d'une ou de plusieurs cuves comprenant des parties actives. Les parties actives se composent de bobines faites de matériaux présentant des propriétés de conduction électrique et montées sur un circuit magnétique. Les parties actives sont immergées dans un liquide isolant. Le liquide isolant est diélectrique et caloporteur. Ce dernier isole les conducteurs entre eux et par rapport à la masse. Il assure également le refroidissement des parties actives du transformateur. Le liquide isolant est typiquement de l'huile minérale ou de l'huile de silicone.

Les transformateurs immergés comprennent également un vase d'expansion. Situé sur le dessus du transformateur, le vase d'expansion permet au niveau de liquide isolant de varier sans impacter la pression dans le transformateur ni découvrir les parties actives. En effet, le volume des liquides isolants varie en fonction de la température. Ainsi, lorsque la température augmente, le liquide isolant se dilate et la pression dans le transformateur augmente. A l'inverse, quand le transformateur se refroidit, le liquide isolant se contracte, la pression dans le transformateur diminue.

Les transformateurs immergés dits ouverts comprennent en outre un dessiccateur également appelé assécheur d'air. Le dessiccateur permet le rejet de l'air du vase d'expansion lors de la dilatation du liquide isolant. Il permet aussi d'éliminer une partie de l'humidité quand le liquide isolant se contracte et qu'il est nécessaire que de l'air entre dans le vase d'expansion. Il est très important que l'humidité de l'air soit éliminée avant son entrée dans le vase d'expansion car la teneur en eau contenue dans l'air échangé dégrade les propriétés diélectriques du liquide isolant.

Un dessiccateur pour transformateur comprend habituellement une cuve de déshumidification avec une entrée pour l'air devant être déshumidifié et une sortie pour l'air déshumidifié et des moyens d'absorption d'humidité.

Les moyens d'absorption d'humidité sont généralement des agents absorbant de type zéolithes ou du gel de silice sous forme de sels ou de granulés. Toutefois, les capacités d'absorption de ces agents sont limitées. Il est nécessaire soit de les remplacer régulièrement soit s'ils sont régénérables de les régénérer avant qu'ils ne soient saturés en eau.

Si les agents absorbants ne sont pas remplacés ou régénérés à temps de l'humidité pénètre dans le transformateur et entraîne une perte de performance du liquide isolant.

L'évaluation de la saturation en humidité des agents absorbants peut se faire visuellement. La cuve du dessiccateur est alors transparente et l'opérateur évalue visuellement l'état de l'agent absorbant. L'évaluation est alors approximative. Cette méthode est donc peu fiable.

De plus, elle ne permet pas une surveillance en continu. Les contrôles effectués par les opérateurs sont réalisés lors de fréquences de maintenance définies. Ces opérations impliquent ainsi un niveau de performance aléatoire du dessiccateur d'air et peuvent faire apparaître une dégradation du liquide isolant contenu dans le transformateur engendrant :
- la vidange du liquide infecté et son remplacement
- une avarie électrique si le niveau de performance du liquide isolant a fortement diminué.

Des capteurs d'humidité ont également été installés dans les dessiccateurs pour pallier ce problème. Toutefois, ces capteurs mesurent l'humidité globale dans le dessiccateur mais ne mesurent pas directement le taux d'absorption d'humidité de l'agent absorbant, ni s'il a atteint son seuil de saturation en humidité. Ils ne permettent donc pas d'intervenir en amont de la saturation.

### 3. Objectifs de l'invention

L'invention vise à pallier au moins certains des inconvénients connus des dessiccateurs.

En particulier, l'invention vise aussi à fournir, dans au moins un mode de réalisation de l'invention, un dessiccateur qui permet de surveiller en continu le taux d'absorption d'humidité de l'agent absorbant et l'arrivée de son seuil de saturation.

L'invention vise aussi à fournir, dans au moins un mode de réalisation, un dessiccateur dont la maintenance est automatisable.

L'invention vise aussi à fournir, dans au moins un mode de réalisation de l'invention, un dessiccateur dont le coût de maintenance est diminué.

L'invention vise aussi à fournir, dans au moins un mode de réalisation, un dessiccateur permettant de mieux prévenir les avaries.

L'invention vise aussi à fournir, dans au moins un mode de réalisation, un dessiccateur permettant une gestion optimisée de l'agent absorbant.

### 4. Exposé de l'invention

Pour ce faire, l'invention concerne un dessiccateur pour appareil électrique immergé dans un liquide isolant comprenant au moins une cuve comprenant :
- une entrée d'air,
- un agent absorbant apte à absorber l'humidité de l'air, l'agent absorbant comprenant un indicateur coloré apte à changer la couleur de l'agent absorbant en fonction de son taux d'humidité et
- une sortie d'air déshumidifié.

Un dessiccateur selon l'invention est caractérisé en ce qu'il comprend :
- au moins un capteur colorimétrique apte à déterminer la couleur de l'agent absorbant,
- un module de gestion relié à chaque capteur colorimétrique et configuré pour pouvoir traiter les données acquises par chaque capteur colorimétrique.

La couleur de l'agent absorbant est déterminée par un capteur colorimétrique ce qui permet d'avoir une indication précise, fiable et reproductible de la couleur de l'agent absorbant et donc de son taux d'humidité. Lorsque l'agent absorbant atteint un certain taux d'humidité, il est considéré comme saturé et ne peut plus absorber d'humidité. Le capteur colorimétrique permet de détecter une couleur indicatrice d'un agent absorbant ayant atteint son seuil de saturation. Le capteur colorimétrique permet également de détecter une couleur indicatrice d'un taux d'humidité élevé mais n'ayant pas atteint le seuil de saturation. Il permet ainsi d'anticiper la saturation de l'agent absorbant. Outre, la couleur en elle-même le capteur colorimétrique peut aussi détecter un changement de couleur. Ce changement de couleur peut être indicatif du passage de l'agent absorbant d'un état à un autre état, par exemple d'un taux d'absorption d'humidité normal à un taux d'absorption d'humidité nécessitant une intervention.

La présence d'un module de gestion permet de traiter les données acquises par chaque capteur, c'est-à-dire les données relatives à la couleur déterminée par chaque capteur.

De préférence, l'appareil électrique est un transformateur, notamment un transformateur pour véhicule ferroviaire. Les transformateurs immergés pour véhicules ferroviaires nécessitent des conditions de maintenance particulières. En effet, du fait de leur mobilité, leur maintenance doit pouvoir être suivie à distance et en continu.

Typiquement, le dessiccateur peut être relié via une sortie d'air déshumidifié au vase d'expansion du transformateur pour l'alimenter en air déshumidifié. Le dessiccateur permet d'éliminer une partie de l'humidité de l'air entrant dans la cuve du transformateur lorsque le liquide isolant se contracte et qu'il est nécessaire que de l'air rentre dans le vase d'expansion.

Selon un mode de réalisation préféré, l'entrée d'air et la sortie d'air déshumidifié sont situées à deux extrémités opposées de la cuve, de préférence deux extrémités opposées selon la longueur. L'air parcourt donc un plus grand chemin entre l'entrée et la sortie d'air ce qui permet un temps de contact plus long avec l'agent absorbant et une meilleure déshumidification.

Selon un mode de réalisation préféré, chaque cuve comprend au moins une zone transparente, dite écran, de manière à ce que la couleur de l'agent absorbant soit visible depuis chaque dit écran. L'écran étant transparent, un capteur colorimétrique peut déterminer la couleur de l'agent absorbant au travers de cet écran.

L'agent absorbant peut comprendre des zéolithes ou un gel de silice. De préférence, l'agent absorbant est régénérable afin de faciliter la maintenance. C'est pourquoi, le gel de silice qui est régénérable est généralement préféré aux zéolithes.

L'agent absorbant comprend un indicateur coloré. L'indicateur coloré peut comprendre du sel de cobalt, de fer ou de cuivre. Par exemple, l'indicateur coloré peut être choisi parmi le groupe constitué de chlorure de cobalt, de bromure de cobalt, d'iodure de cobalt, de thiocyanate de cobalt, de sulfate de cobalt, de phosphate de cobalt, de bromure de cuivre, de chlorure de cuivre, de sulfate d'ammonium et de fer et de bromure de fer.

De préférence, les sels de fer, en particulier les sels de fer3+ sont préférés car ils sont moins toxiques que les sels de cuivre et de cobalt et leur utilisation est moins réglementée que celle des sels de cobalt. De plus, les sels de fer présentent un changement de couleur notable même pour un faible changement de taux d'humidité.

Le dessiccateur comprend au moins un capteur colorimétrique apte à déterminer la couleur de l'agent absorbant.

Le capteur colorimétrique peut, par exemple, être un capteur photoélectrique ou circulaire à LED.

Chaque capteur colorimétrique peut déterminer la couleur de l'agent absorbant. Il peut également déterminer un changement de couleur de ce dernier entre un premier et un second état. Le capteur colorimétrique permet donc de déterminer un taux d'humidité indicatif d'une saturation de l'agent absorbant ou d'un état proche de la saturation.

Selon un mode de réalisation préféré, chaque capteur colorimétrique est situé à l'extérieur de la cuve face à un dit écran de manière à pouvoir déterminer la couleur de l'agent absorbant depuis l'extérieur de la cuve. Ce mode de réalisation permet d'utiliser les dessiccateurs transparents ou avec écran déjà existants. Il suffit de rajouter un dispositif portant le ou les capteurs à l'extérieur d'un ancien dessiccateur.

Le dessiccateur selon l'invention comprend un module de gestion relié à chaque capteur colorimétrique et configuré pour pouvoir traiter les données acquises par chaque capteur colorimétrique.

Par module, on entend un élément logiciel, un sous-ensemble d'un programme logiciel, pouvant être compilé séparément, soit pour une utilisation indépendante, soit pour être assemblé avec d'autres modules d'un programme, ou un élément matériel, ou une combinaison d'un élément matériel et d'un sous-programme logiciel. Un tel élément matériel peut comprendre un circuit intégré propre à une application (plus connue sous l'acronyme ASIC pour la dénomination anglaise Application-Specific Integrated Circuit) ou un circuit logique programmable (plus connu sous l'acronyme FPGA pour la dénomination anglaise Field-Programmable Gate Array) ou un circuit de microprocesseurs spécialisés (plus connu sous l'acronyme DSP pour la dénomination anglaise Digital Signal Processor) ou tout matériel équivalent. D'une manière générale, un module est donc un élément (logiciel et/ou matériel) qui permet d'assurer une fonction.

Selon un mode de réalisation préféré, le module de gestion est configuré pour pouvoir :
- transmettre des informations à un système de maintenance de l'appareil électrique et/ou
- commander au moins un émetteur apte à émettre un signal d'alerte.

Les données acquises par le ou les capteurs sont traitées par le module de gestion. En fonction des données traitées, le module de gestion transmet un certain type d'information au système de maintenance de l'appareil électrique et/ou commande l'émission d'un signal par un émetteur.

Selon un mode de réalisation, le module de gestion est configuré pour pouvoir transmettre des informations à un système de maintenance de l'appareil électrique. Ainsi, si un ou plusieurs capteurs colorimétriques déterminent une couleur de l'agent absorbant indicatrice de la saturation de ce dernier ou d'un état proche de la saturation, les données acquises par le capteur vont être traitées par le module de gestion. Puis, le module de gestion va transmettre des informations relatives à l'état de l'agent absorbant au système de maintenance. Typiquement, le système de maintenance est configuré pour traiter et/ou enregistrer les informations transmises par le module de gestion. Le système de maintenance peut être à proximité du dessiccateur ou à distance. Ainsi dans le cas d'un transformateur pour véhicule ferroviaire, le système de maintenance peut être embarqué ou au sol. Le système de maintenance est configuré pour indiquer à l'opérateur en charge de la maintenance quand l'agent absorbant doit être changé ou régénéré.

Selon un autre mode de réalisation, le module de gestion est configuré pour pouvoir commander au moins un émetteur apte à émettre un signal d'alerte. Le signal d'alerte peut être un signal visuel ou sonore. De préférence, l'émetteur est une LED et le signal d'alerte est un signal visuel consistant en l'allumage de la LED. En fonction, des signaux émis par l'émetteur, l'opérateur peut décider de renouveler ou de régénérer l'agent absorbant.

De préférence, le module de gestion est configuré pour pouvoir transmettre des informations à un système de maintenance de l'appareil électrique et commander au moins un émetteur apte à émettre un signal d'alerte. Le module de gestion est configuré pour pouvoir à la fois transmettre des informations à un système de maintenance capable de traiter et d'enregistrer l'ensemble des informations émises et commander l'émission d'un signal d'alerte. Le module de gestion est donc configuré pour qu'un opérateur ait des données sur la saturation de l'agent absorbant de manière simple et accessible directement sur la dessiccateur par l'émission d'un signal d'alerte. L'opérateur peut également avoir accès à des données à distance et ces données peuvent être compilées pour donner des informations plus complètes que le simple allumage d'un signal d'alerte.

Selon un mode de réalisation préféré, l'entrée d'air et la sortie d'air déshumidifié sont situées à deux extrémités opposées de la cuve et la cuve comprend plusieurs capteurs colorimétriques. Au moins deux capteurs colorimétriques sont positionnés à même intervalle, dit niveau, entre les extrémités de l'entrée d'air et de la sortie d'air et/ou au moins deux capteurs colorimétriques sont positionnés à un dit niveau différent. L'air circule depuis l'entrée de la cuve jusqu'à la sortie de la cuve. Lors de sa circulation dans la cuve, l'air se décharge progressivement de son humidité par contact avec l'agent absorbant. L'air à l'entrée de la cuve étant plus humide que l'air en sortie, l'agent absorbant sera saturé graduellement en humidité depuis l'entrée d'air jusqu'à la sortie d'air déshumidifié. L'agent absorbant des niveaux les plus proches de l'entrée seront donc saturés avant ceux proches de la sortie.

En positionnant des capteurs colorimétriques à différents niveaux, on peut donc surveiller cette évolution de la saturation de l'agent absorbant. Si seuls les capteurs positionnés au niveau le plus proche de l'entrée déterminent une couleur indicatrice d'une saturation de l'agent absorbant alors le taux d'absorption d'humidité global de l'ensemble de l'agent absorbant contenu dans la cuve peut être considéré comme bas. Si des capteurs positionnés à des niveaux intermédiaires déterminent une couleur indicatrice d'une saturation de l'agent absorbant alors le taux d'absorption d'humidité global de l'ensemble de l'agent absorbant contenu dans la cuve peut être considéré comme moyen. Si des capteurs positionnés à proximité de la sortie de la cuve déterminent une couleur indicatrice d'une saturation de l'agent absorbant alors le taux d'absorption d'humidité global de l'ensemble de l'agent absorbant contenu dans la cuve peut être considéré comme haut. Il y a alors saturation de la totalité de l'agent absorbant.

En positionnant des capteurs à même niveau, on fiabilise la surveillance de la saturation. En effet, la couleur déterminée par un seul capteur peut être erronée du fait par exemple d'un capteur défaillant ou de l'obstruction d'un écran. L'acquisition de données colorimétriques de l'agent absorbant par plusieurs capteurs colorimétriques permet de s'affranchir de ce risque.

Selon un mode de réalisation, le module de gestion est configuré pour que lorsqu'un ou plusieurs capteurs colorimétriques d'un niveau donné, dit niveau n, détermine une couleur donnée, dite couleur de saturation, une information, dite information de saturation du niveau n, soit transmise au système de maintenance et/ou l'émetteur émette un signal dit signal d'alerte saturation du niveau n. Lorsqu'un ou plusieurs capteurs colorimétriques de même niveau déterminent une couleur indicatrice d'une saturation de l'agent absorbant ou d'une saturation prochaine, le niveau auquel ils sont situés donne une indication sur le taux d'absorption d'humidité global de l'agent absorbant dans l'ensemble de la cuve. Plus le niveau est situé près de la sortie de la cuve plus la saturation globale de l'agent absorbant est élevée. Ainsi, le signal d'alerte émis par l'émetteur pourra être gradué en fonction du niveau des capteurs qui ont capté une couleur donnée et entrainé l'émission de ce signal. Par exemple, un signal visuel correspondant à un niveau de saturation bas pourra être émis lorsque seuls des capteurs d'un niveau bas ont détecté une saturation de l'agent absorbant, un signal visuel correspondant à un niveau de saturation intermédiaire lorsque la saturation aura été détectée par des capteurs intermédiaires et un signal correspondant à un niveau de saturation haut lorsque la saturation aura été détectée par des capteurs à proximité de la sortie d'air déshumidifié. De même des informations relatives au taux d'humidité ou à la saturation de l'agent absorbant à un niveau donné pourront être transmises au système de maintenance. Le système de maintenance pourra alors fournir à l'opérateur des informations sur le taux d'absorption d'humidité ou la saturation de l'agent absorbant à un niveau donné, le taux d'absorption d'humidité global de l'ensemble de la cuve et son évolution dans le temps. Le système de maintenance pourra également détecter une avarie de dessiccateur ou des capteurs par exemple lorsque les données acquises par un ou plusieurs capteurs à un niveau donné ne sont pas cohérentes avec les données acquises par les capteurs aux niveaux qui lui sont inférieurs ou supérieurs.

Selon un mode de réalisation, le module de gestion est configuré pour que lorsqu'un ou plusieurs capteurs colorimétriques d'un niveau donné, dit niveau n, détermine une couleur donnée, dite couleur de saturation, une information, dite information de saturation du niveau n, soit transmise au système de maintenance.

Selon un mode de réalisation, le module de gestion est configuré pour que lorsqu'un ou plusieurs capteurs colorimétriques d'un niveau donné, dit niveau n, détermine une couleur donnée, dite couleur de saturation, l'émetteur émette un signal dit signal d'alerte saturation du niveau n.

Selon un mode de réalisation, le module de gestion est configuré pour que lorsqu'un ou plusieurs capteurs colorimétriques d'un niveau donné, dit niveau n, détermine une couleur donnée, dite couleur de saturation, une information, dite information de saturation du niveau n, soit transmise au système de maintenance et l'émetteur émette un signal dit signal d'alerte saturation du niveau n.

De préférence, le module de gestion est configuré pour que lorsque l'ensemble des capteurs colorimétriques d'un niveau donné, dit niveau n, détermine une couleur donnée, dite couleur de saturation, une information, dite information de saturation du niveau n, soit transmise au système de maintenance et/ou au moins un émetteur émette un signal dit signal d'alerte saturation du niveau n. Afin de s'assurer que l'émission d'un signal d'alerte saturation de niveau n ou la transmission d'une information de saturation du niveau ne soit pas réalisée à cause d'un artefact intervenu sur un seul capteur du niveau ou que la saturation à ce niveau soit bien homogène, l'émission ou la transmission n'est réalisée que si l'ensemble des capteurs d'un même niveau détermine une couleur donnée. Il peut également s'agir d'un nombre de capteur donné, par exemple l'ensemble des capteurs d'un même niveau à l'exception d'un.

L'invention concerne également un transformateur comprenant un dessiccateur selon l'invention. Typiquement, le transformateur dit transformateur immergé est un transformateur dont les parties actives sont immergées dans un liquide isolant. Le transformateur immergé comprend un vase d'expansion qui permet au niveau d'huile de varier sans impacter la pression dans le transformateur ni découvrir les parties actives. La sortie d'air déshumidifié du dessiccateur selon l'invention est reliée au vase d'expansion afin d'alimenter ce dernier en air déshumidifié.

Selon un mode de réalisation préféré, le transformateur est un transformateur pour véhicule ferroviaire.

L'invention concerne également un procédé de surveillance d'un transformateur équipé d'un dessiccateur selon l'invention comprenant les étapes :
- de détermination de la couleur de l'agent absorbant par au moins un capteur colorimétrique et
- si au moins un capteur colorimétrique d'un niveau donné, dit niveau n, détermine une couleur donnée, dite couleur de saturation,
- une information, dite information de saturation du niveau n, est transmise à un système de maintenance du transformateur et/ou
- un émetteur émet un signal dit signal d'alerte saturation du niveau n.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un dessiccateur selon un mode de réalisation de l'invention avec des émetteurs,
- la figure 2 est une vue schématique d'un dessiccateur selon un mode de réalisation de l'invention avec une transmission d'information à un système de maintenance.

### 6. Description détaillée d'un mode de réalisation de l'invention

Sur la figure, les échelles et les proportions ne sont pas strictement respectées et ce, à des fins d'illustration et de clarté. L'invention ne se limite pas aux seuls modes de réalisation décrits.

Les figures let 2 représentent deux modes de réalisation du dessiccateur 1 selon l'invention.

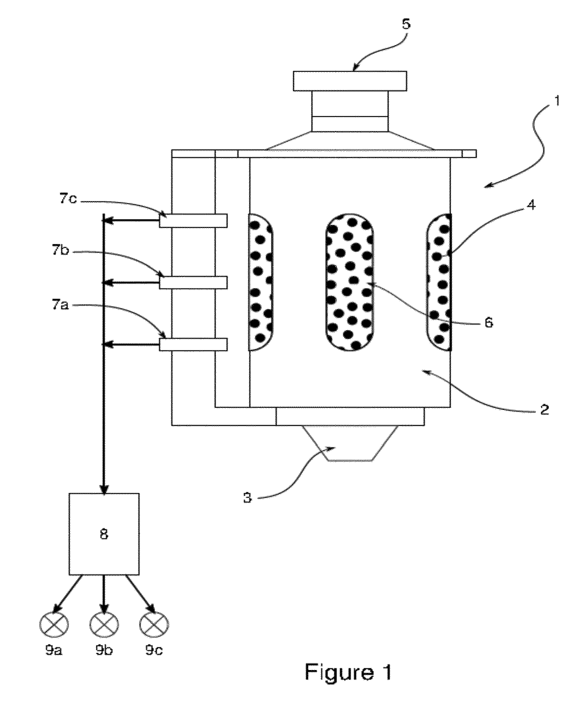

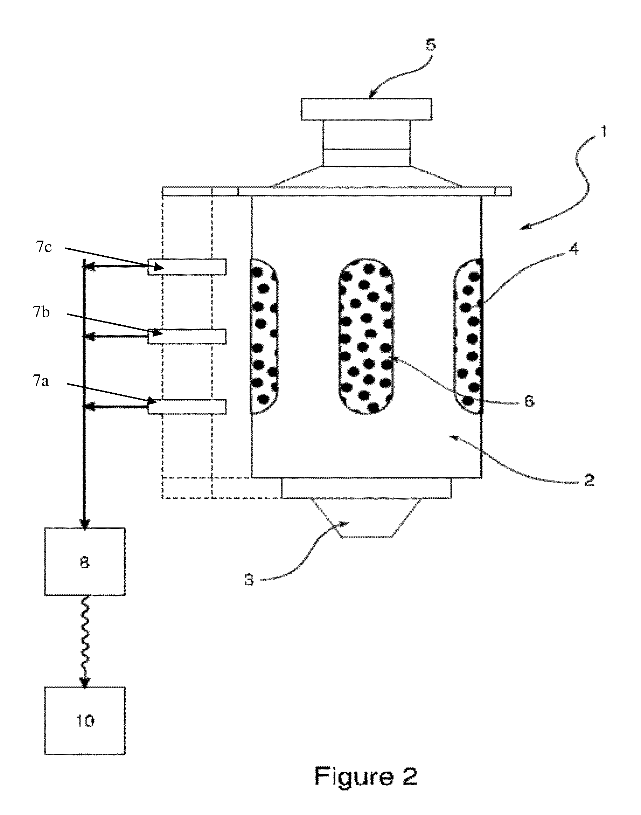

Comme représenté sur les figures 1 et 2, le dessiccateur 1 comprend une cuve 2 de forme cylindrique.

La cuve 2 comprend un agent absorbant 4 apte à absorber l'humidité de l'air. L'agent absorbant 4 est composé de billes de silice.

L'air pénètre dans la cuve 2 par l'entrée 3 d'air située en bas de la cuve 2. Il est chauffé par un dispositif de chauffage non représenté et circule au travers l'agent absorbant 4 jusqu'à la sortie 5 d'air déshumidifié située en haut de la cuve 2. La sortie 5 d'air déshumidifié est destinée à être reliée au vase d'expansion d'un transformateur immergé.

L'agent absorbant 4 comprend un indicateur coloré apte à changer la couleur de l'agent absorbant 4 en fonction de son taux d'humidité. L'indicateur coloré comprend du sel de Fe3+. L'agent absorbant 4 passe alors de la couleur orange à blanche lorsque l'agent absorbant 4 capte une certaine quantité d'humidité. De tels agents absorbants 4 comprenant un indicateur coloré sont commercialisés sous forme de billes de silice de la marque Sorbead Orange Chameleon®. L'agent absorbant 4 présente donc une couleur orange lorsqu'il n'a pas absorbé d'humidité et au fur à mesure qu'il absorbe l'humidité il passe de l'orange au blanc. La couleur blanche indique que le niveau de saturation à partir duquel il ne peut plus absorber d'humidité supplémentaire est atteint.

Pour pouvoir observer ce changement de couleur, la cuve 2 est en matière transparente telle que le verre ou une matière plastique transparente de type plexiglas. L'extérieur de la cuve 2 est renforcé par un bouclier de protection en métal comme de l'acier inoxydable dans lequel sont percés des écrans 6 de manière à ce que l'intérieur de la cuve 2 soit visible au travers de ces écrans 6.

Le dessiccateur 1 comprend en outre plusieurs capteurs colorimétrique (7a, 7b, 7c) aptes à déterminer la couleur de l'agent absorbant 4. Ils peuvent donc déterminer toutes les nuances de couleur entre le orange indicatif d'un agent absorbant 4 n'ayant pas absorbé d'humidité et le blanc indicatif d'un agent absorbant 4 à saturation. Ces capteurs 7 peuvent être des capteurs colorimétrique photoélectriques ou circulaires à LED. Ces capteurs colorimétriques 7 sont positionnés à différents niveaux de la cuve 2. Chaque niveau correspond à un intervalle entre les extrémités d'entrée 3 et de sortie 5 de la cuve 2. En l'occurrence, la cuve 2 étant cylindrique, l'entrée 3 étant située en bas de cette dernière et la sortie 5 en haut, chaque niveau correspond à une hauteur donnée de la cuve 2.

Chaque capteur colorimétrique 7 est relié à un module de gestion 8 configuré pour pouvoir traiter les données acquises par chacun des capteurs colorimétriques (7a, 7b, 7c). Le module de gestion 8 pourra notamment comparer les données relatives à la couleur de l'agent absorbant 4 à une valeur de couleur seuil ou à des données précédemment acquises ou les mettre en correspondance avec un taux d'absorption d'humidité ou une saturation.

Le module de gestion 8 est configuré pour que lorsqu'un ou plusieurs capteurs colorimétriques 7 d'un niveau donné, dit niveau n, détermine une couleur donnée, dite couleur de saturation, l'émetteur 9 émette un signal dit signal d'alerte saturation du niveau n comme représenté à la figure 1 et/ou une information, dite information de saturation du niveau n, soit transmise au système de maintenance 10.

La couleur de saturation peut être la couleur indicatrice que l'agent absorbant 4 a atteint la saturation , par exemple le blanc pour des billes de silice de type Sorbead Orange Chameleon®. La couleur de saturation peut, également, être une couleur indicatrice d'un état proche de la saturation, par exemple un blanc très légèrement orangé afin d'anticiper la saturation. La couleur de saturation peut également être déterminée par comparaison avec la couleur de l'agent absorbant 4 à un instant donné par exemple à l'origine, avant qu'il n'absorbe de l'humidité. On recherche alors non pas une couleur précise mais un changement de couleur plus ou moins marqué indicateur d'un changement d'état.

Le capteur 7a détermine la couleur de l'agent absorbant 4 au niveau a, le capteur 7b détermine la couleur de l'agent absorbant 4 au niveau b, le capteur 7c détermine la couleur de l'agent absorbant 4 au niveau c. Les niveaux a à c étant situés de bas en haut de la cuve 2, du fait de la circulation de l'air, l'agent absorbant 4 du niveau a devrait être saturé en premier puis celui du niveau b puis celui du niveau c.

Selon le mode de réalisation représenté à la figure 1, le module de gestion 8 est configuré pour pouvoir commander un ou des émetteurs 9 aptes à émettre un signal d'alerte.

Lorsque le capteur 7a détermine que l'agent absorbant 4 du niveau a a atteint la couleur de saturation, le module de gestion 8 traite cette donnée et commande à l'émetteur 9 qu'il émette un signal d'alerte saturation de niveau a. En l'occurrence, le signal d'alerte saturation de niveau a correspond à l'allumage de la LED 9a. Le niveau a étant situé en bas de cuve 2 à proximité de l'entrée 3 d'air, la saturation du niveau a est indicatrice d'une faible saturation globale de l'agent absorbant 4 de la cuve 2.

Lorsque le capteur 7b détermine que l'agent absorbant 4 du niveau b a atteint la couleur de saturation, le module de gestion 8 traite cette donnée et commande à l'émetteur 9 qu'il émette un signal d'alerte saturation de niveau b. En l'occurrence, le signal d'alerte saturation de niveau b correspond à l'allumage de la LED 9b. La LED 9a est alors normalement allumée car la saturation du niveau a intervient avant celle du niveau b. Selon la configuration du module de gestion 8, l'allumage de la LED 9b peut entraîner l'extinction de la LED 9a ou non. Le niveau b étant situé à un niveau intermédiaire de la cuve 2 entre l'entrée 3 d'air et la sortie 5 d'air, la saturation du niveau b est indicatrice d'une saturation globale de l'agent absorbant 4 moyenne.

Lorsque le capteur 7c détermine que l'agent absorbant 4 du niveau c a atteint la couleur de saturation, le module de gestion 8 traite cette donnée et commande à l'émetteur 9 qu'il émette un signal d'alerte saturation de niveau c. En l'occurrence, le signal d'alerte saturation de niveau c correspond à l'allumage de la LED 9c. La LED 9b est alors normalement allumée car la saturation du niveau b intervient avant celle du niveau c. Selon la configuration du module de gestion 8, l'allumage de la LED 9c peut entraîner l'extinction de la LED 9b ou non. Le niveau c étant situé en haut de la cuve 2 à proximité de la sortie 5 d'air, la saturation du niveau c est indicatrice d'une forte saturation globale de l'agent absorbant 4.

Selon le mode de réalisation représenté à la figure 2, le module de gestion 8 est configuré pour pouvoir transmettre des informations à un système de maintenance 10 de l'appareil électrique.

Lorsque le capteur 7a détermine que l'agent absorbant 4 du niveau a a atteint la couleur de saturation, le module de gestion 8 traite cette donnée et transmet une information de saturation du niveau a au système de maintenance 10. Le système de maintenance 10 peut être situé à distance du dessiccateur 1, les informations peuvent alors être transmises via un système de télédiagnostic ou par une balise GSM/GSMR dédiée équipée d'une carte SIM.

Lorsque le capteur 7b détermine que l'agent absorbant 4 du niveau b a atteint la couleur de saturation, le module de gestion 8 traite cette donnée et le module de gestion 8 traite cette donnée et transmet une information de saturation du niveau b au système de maintenance 10.

De même, lorsque le capteur 7c détermine que l'agent absorbant 4 du niveau c a atteint la couleur de saturation, le module de gestion 8 traite cette donnée et transmet une information de saturation du niveau c au système de maintenance 10.

Le système de maintenance 10 traite l'ensemble de ces données, il peut les enregistrer, en vérifier la pertinence et informer l'opérateur qu'une opération de maintenance est nécessaire ou peut être envisagée à une date donnée. Par exemple, une information de saturation de niveau c est indicatrice qu'une opération de maintenance doit être programmée très rapidement. Une information de saturation de niveau b est indicatrice qu'une opération de maintenance doit être programmée à une certaine date. Cette date peut être déterminée à partir des informations qui ont été acquises depuis le début de ce cycle de maintenance c'est-à-dire depuis que l'agent absorbant 4 a été régénéré ou à partir d'informations acquises lors de cycles précédents et qui lorsqu'elles sont traitées permettent d'évaluer la date de maintenance optimale.

## Revendications

1. Dessiccateur (1) pour appareil électrique immergé dans un liquide isolant comprenant au moins une cuve (2) comprenant :
- une entrée (3) d'air,
- un agent absorbant (4) apte à absorber l'humidité de l'air, l'agent absorbant (4) comprenant un indicateur coloré apte à changer la couleur de l'agent absorbant (4) en fonction de son taux d'humidité,
- une sortie (5) d'air déshumidifié
**caractérisé en ce que** le dessiccateur (1) comprend :
- au moins un capteur colorimétrique (7) apte à déterminer la couleur de l'agent absorbant (4),
- un module de gestion (8) relié à chaque capteur colorimétrique (7) et configuré pour pouvoir traiter les données acquises par chaque capteur colorimétrique (7).

2. Dessiccateur (1) selon la revendication 1 **caractérisé en ce que** le module de gestion (8) est configuré pour pouvoir :
- transmettre des informations à un système de maintenance (10) de l'appareil électrique et/ou
- commander au moins un émetteur (9) apte à émettre un signal d'alerte.

3. Dessiccateur (1) selon la revendication 1 ou 2 **caractérisé en ce que** l'entrée (3) d'air et la sortie (5) d'air déshumidifié sont situées à deux extrémités opposées de la cuve (2) et **en ce que** la cuve (2) comprend plusieurs capteurs colorimétriques (7), au moins deux capteurs colorimétriques (7) étant positionnés à même intervalle, dit niveau, entre les extrémités de l'entrée (3) d'air et de la sortie (5) d'air et/ou au moins deux capteurs colorimétriques (7) étant positionnés à un dit niveau différent.

4. Dessiccateur (1) selon l'une quelconque des revendications 1 à 3 **caractérisé en ce que** le module de gestion (8) est configuré pour que lorsqu'un ou plusieurs capteurs colorimétriques (7) d'un niveau donné, dit niveau n, détermine une couleur donnée, dite couleur de saturation, une information, dite information de saturation du niveau n, soit transmise au système de maintenance (10) et/ou l'émetteur (9) émette un signal dit signal d'alerte saturation du niveau n.

5. Dessiccateur (1) selon la revendication 4 **caractérisé en ce que** le module de gestion (8) est configuré pour que lorsque l'ensemble des capteurs colorimétriques (7) d'un niveau donné, dit niveau n, détermine une couleur donnée, dite couleur de saturation, une information, dite information de saturation du niveau n, soit transmise au système de maintenance (10) et/ou au moins un émetteur (9) émette un signal dit signal d'alerte saturation du niveau n.

6. Dessiccateur (1) selon l'une quelconque des revendications 1 à 5 **caractérisé en ce que** la cuve (2) comprend au moins une zone transparente, dite écran (6), de manière à ce que la couleur de l'agent absorbant (4) soit visible depuis chaque dit écran (6).

7. Dessiccateur (1) selon la revendication 6 **caractérisé en ce que** chaque capteur colorimétrique (7) est situé à l'extérieur de la cuve (2) face à un dit écran (6) de manière à pouvoir déterminer la couleur de l'agent absorbant (4) depuis l'extérieur de la cuve (2).

8. Transformateur **caractérisé en ce qu'**il comprend un dessiccateur (1) tel que défini selon l'une quelconque des revendications 1 à 7.

9. Procédé de surveillance d'un transformateur équipé d'un dessiccateur (1) tel que défini selon l'une quelconque des revendications 1 à 7 **caractérisé en ce qu'**il comprend les étapes :
- de détermination de la couleur de l'agent absorbant (4) par au moins un capteur colorimétrique (7) et
- de transmission d'une information, dite information de saturation du niveau n, à un système de maintenance (10) du transformateur et/ou d'émission d'un signal, dit signal d'alerte saturation du niveau n, par un émetteur (9), si au moins un capteur colorimétrique (7) d'un niveau donné, dit niveau n, détermine une couleur donnée, dite couleur de saturation.
